# EUROPEAN PATENT APPLICATION

(11) **EP 4 779 122 A1**
(43) Date of publication of application: **22.07.2026**
(21) Application number: 26152151.2
(22) Date of filing: 15.01.2026
(51) Int. Cl.: F01D 5/14, F01D 5/28

(54) **SPECIAL TOOLING FOR FABRICATING VANES**

(30) Priority: 16.01.2025 US 202519024014
(71) Applicant: RTX Corporation, Farmington, CT 06032 (US)
(72) Inventor: DWYER, John, Colchester 06415 (US)
(74) Representative: Dehns

(57) **Abstract**

A special tool in intermediate form, comprising: at least one aft core assembly (160) having at least one aft alignment aperture (150) and at least one baffle (120); a forward core assembly having at least one forward alignment aperture, the at least one aft core assembly (160) and the forward core assembly disposed adjacent to and aligned with one another; at least one alignment tool disposed within each at least one aft alignment aperture (150), and aligned with and also disposed within each at least one forward alignment aperture; and a preform material (140) disposed about the adjacent, aligned aft core assembly (160) and forward core assembly.

## Description

### FIELD OF THE INVENTION

The subject matter disclosed herein relates to special tooling and, in particular, to special tooling for fabricating vanes.

### BACKGROUND OF THE INVENTION

During fabrication of a vane composed of a ceramic matrix composite material, an interior of an airfoil section or core is shaped by a special tool, e.g., a mandrel. The mandrel is a specially machined piece of graphite. A ceramic matrix composite preform fabric may be braided or wrapped around the mandrel. Next, when densifying the airfoil and braided or wrapped ceramic matrix composite preform fabric, the mandrel holds and maintains the shape of the airfoil section or core, while chemical vapor infiltrated gasses infiltrate into the interior material through specially machined slots on the mandrel. When carrying out the aforementioned method, the mandrel may be designed in two or three parts so as to be inserted fully into the airfoil section or core cavity, due to the complex geometry of the airfoil. As a result, the mandrel is fragile. Now, given the cost(s) associated with the manufacture of the fragile mandrel, the fragile mandrel must be removed post-densification, without breaking, to be reused. However, given the size and fragility of the graphite-based mandrel, the mandrel can be difficult to remove from the cavity without breaking.

Consequently, there exists a need for special tooling that costs less, is more durable and can be reused more easily.

### SUMMARY OF THE INVENTION

The present disclosure is directed, in a first aspect, to a special tool in intermediate form, comprising: at least one aft core assembly having at least one aft alignment aperture and at least one baffle; a forward core assembly having at least one forward alignment aperture, the at least one aft core module and the forward core disposed adjacent to and aligned with one another; at least one alignment tool disposed within each at least one aft alignment aperture, and aligned with and also disposed within each at least one forward alignment aperture; and a preform material disposed about the adjacent, aligned aft core and forward core.

In further embodiments of the present disclosure, including further embodiments of the above exemplary embodiments, the at least one aft core assembly, the forward core assembly or both the at least one aft core assembly and the forward core assembly comprise one or more of the following foam materials: carbon, silicon carbide, and combinations thereof.

In further embodiments of the present disclosure, including further embodiments of the above exemplary embodiments, the carbon foam comprises a reticulated vitreous carbon foam.

In further embodiments of the present disclosure, including further embodiments of the above exemplary embodiments, the one or more foam materials further comprise a coating of one or more of the following polymers: polyvinyl butyral, and combinations thereof.

In further embodiments of the present disclosure, including further embodiments of the above exemplary embodiments, the one or more polymer coated foam materials further comprise the preform material disposed about at least a portion of the at least one aft core assembly, the at least one forward core assembly or both the at least one aft core assembly and the at least one forward core assembly.

In further embodiments of the present disclosure, including further embodiments of the above exemplary embodiments, the at least one alignment tool comprises an alignment pin.

In further embodiments of the present disclosure, including further embodiments of the above exemplary embodiments, the preform material comprises one or more of the following materials: silicon carbide, and combinations thereof.

In another embodiment, the present disclosure is directed to a process for fabricating a special tool, comprising: fabricating an aft core assembly; fabricating a forward core assembly; assembling together the aft core assembly and the forward core assembly using at least one alignment tool to form an assembled core; disposing at least one preform material about at least a portion of an exterior surface of the assembled core; disposing the assembled core within a cavity of a gas turbine engine component having an airfoil; and densifying gas turbine engine component to form at least one cooling circuit and at least one porous network within the assembled core.

In further embodiments of the present disclosure, including further embodiments of the above exemplary embodiments, fabricating the aft core assembly comprises: providing at least one aft cavity module comprising a foam; separating the at least one aft cavity module using at least one baffle; assembling the at least one aft cavity module and the at least one baffle together to form an aft assembly; disposing at least one preform material about at least a portion of an exterior surface of the aft assembly; and forming at least one aft alignment aperture through the aft assembly to form the aft core assembly.

In further embodiments of the present disclosure, including further embodiments of the above exemplary embodiments, disposing the at least one preform material comprises at least one of the following techniques: overwrapping, braiding, and combinations thereof.

In further embodiments of the present disclosure, including further embodiments of the above exemplary embodiments, the foam comprises one or more of the following foam materials: carbon, silicon carbide, and combinations thereof.

In further embodiments of the present disclosure, including further embodiments of the above exemplary embodiments, the foam materials further comprise a coating of one or more of the following polymers: polyvinyl butyral, and combinations thereof.

In further embodiments of the present disclosure, including further embodiments of the above exemplary embodiments, fabricating the forward core assembly comprises: fabricating a forward cavity module comprising a foam; disposing at least one preform material about at least a portion of an exterior surface of the forward cavity module to form a forward assembly; and forming at least one forward alignment aperture through the forward assembly to form a forward core assembly.

In further embodiments of the present disclosure, including further embodiments of the above exemplary embodiments, disposing the at least one preform material comprises at least one of the following techniques: overwrapping, braiding, and combinations thereof.

In further embodiments of the present disclosure, including further embodiments of the above exemplary embodiments, the foam comprises one or more of the following foam materials: carbon, silicon carbide, and combinations thereof.

In further embodiments of the present disclosure, including further embodiments of the above exemplary embodiments, the foam materials further comprise a coating of one or more of the following polymers: polyvinyl butyral, and combinations thereof.

In further embodiments of the present disclosure, including further embodiments of the above exemplary embodiments, the at least one preform material comprises one or more of the following materials: silicon carbide, and combinations thereof.

In further embodiments of the present disclosure, including further embodiments of the above exemplary embodiments, the at least one alignment tool comprises an alignment pin.

In further embodiments of the present disclosure, including further embodiments of the above exemplary embodiments, disposing the at least one preform material comprises at least one of the following techniques: overwrapping, braiding, and combinations thereof.

In yet another embodiment, the present disclosure is directed to a process for fabricating at least one cooling circuit and at least one porous network within a gas turbine engine component, comprising the steps of: fabricating an aft core assembly; fabricating a forward core assembly; assembling together the aft core assembly and the forward core assembly using at least one alignment tool to form an assembled core; disposing at least one preform material about at least a portion of an exterior surface of the assembled core; disposing the assembled core within a cavity of a gas turbine engine component having an airfoil; and densifying gas turbine engine component to form the at least one cooling circuit and the at least one porous network within the assembled core of the gas turbine engine component.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIGS. 1A-1D illustrate the fabrication of an aft core as part of the overall process for fabricating a special tool.
FIGS. 2A-2C illustrate the fabrication of a forward core as part of the overall process for fabricating the special tool.
FIGS. 3A and 3B illustrate the fabrication of a core assembly using the aft core of FIGS. 1A-1D and forward core of FIGS. 2A-2C as part of the overall process for fabricating the vane.
FIG. 4 illustrates another exemplary step in the fabrication of the special tool utilizing the core assembly of FIG. 3.
FIG. 5 illustrates another exemplary step in the fabrication of the special tool following the exemplary step of FIG. 4.
FIG. 6 illustrates the special tool enclosed within a vane assembly following the exemplary step of FIG. 5.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

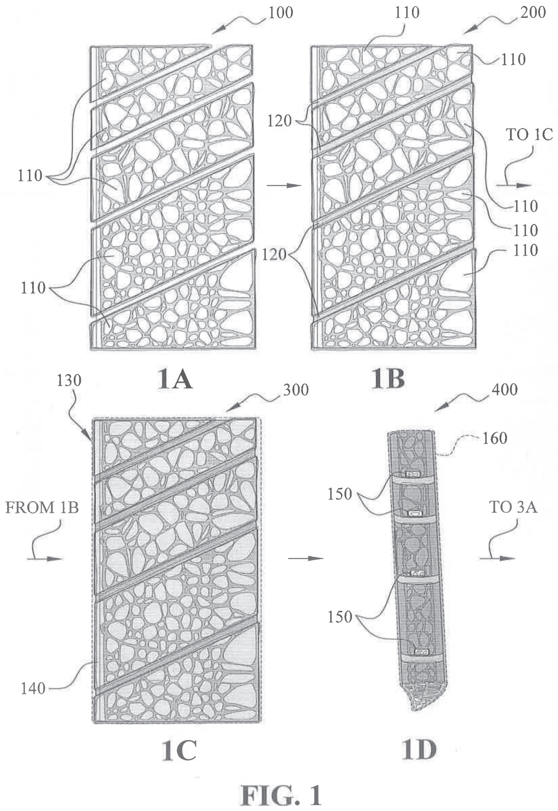

The present disclosure is directed to a special tool, e.g., a modular core, for fabricating an airfoil feature of a vane and, more specifically, a vane comprising a ceramic matrix composite material ("CMC vane"). The exemplary modular core may be fabricated using a carbon-containing foam, with an open pore structure and pore density, that may be machinable, capable of holding a shape under mild pressure(s), and chemically compatible with a future densification process. The exemplary modular core may be fabricated according to the steps illustrated in FIGS. 1A-1D, 2A-2C, 3A-3B, 4, 5 and 6.

Referring now to FIGS. 1A-1D, at least one aft cavity module 110 comprising a carbon-containing foam material may be provided at an exemplary step 100 of FIG. 1A. The carbon-containing foam material may comprise an open pore structure and pore density, that may be machinable, capable of holding a shape under mild pressure(s), and chemically compatible with a future densification process. Suitable carbon-containing foam materials may include, but are not limited to, carbon foam, e.g., reticulated vitreous carbon foam, silicon carbide foam, combinations thereof, and the like. The foam materials may be modified such that a polymeric material (not shown) may be disposed about material. Suitable polymeric material may include, but is not limited to, polyvinyl butyral, polyvinyl alcohol, combinations thereof, and the like.

Next, at an exemplary step 200 of FIG. 1B, the aft cavity module 110 may be separated using one or more baffles 120 comprising a material that may be machinable, capable of holding a shape under mild pressure(s), and chemically compatible with a future densification process. Suitable baffle materials may include, but are not limited to, silicon carbide, combinations thereof, and the like. The separation technique may be any machining process suitable for forming the baffle structure without degrading the carbon-containing foam materials of the aft cavity modules 110. Prior to assembling with the aft cavity modules 110, a polymeric material, e.g., a polymer resin, may be applied to the baffles 120 so that the baffles 120 adhere to the aft cavity modules 110. Suitable polymeric material may include, but is not limited to, a polymeric resin, e.g., polyvinyl butyral (PVB), polyvinyl alcohol (PVA), combinations thereof, and the like. Afterwards, the aft cavity modules 110 and baffles 120 may be assembled together to form an aft cavity assembly 130. The assembly technique may be any process suitable for joining together the cavity modules and baffles without degrading the carbon-containing foam materials. For example, any suitable tooling may be utilized to hold the aft cavity modules 110 and baffles 120 in place while the polymeric material dries. After assembling the aft cavity modules 110 and baffles 120, the resultant aft cavity assembly 130 may be allowed to dry using any suitable technique.

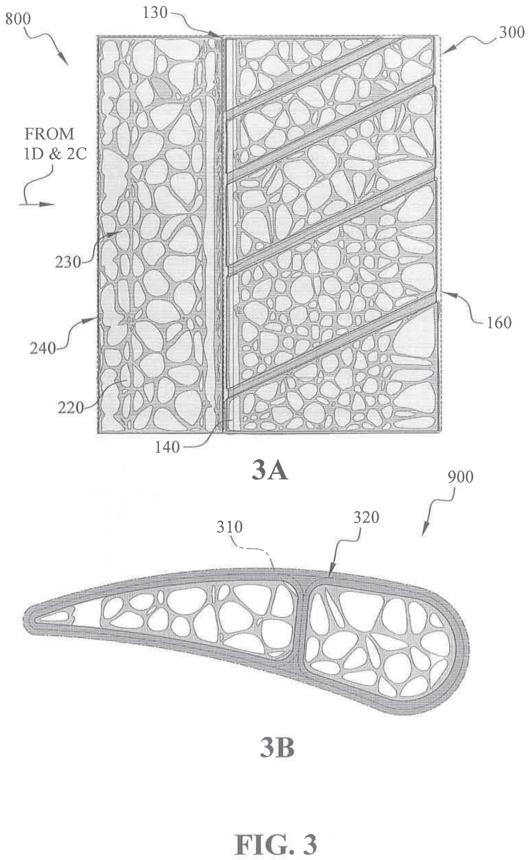

Next, at an exemplary step 300 of FIG. 1C, at least one preform material 140 may be disposed about at least a portion of an exterior surface of the aft cavity assembly 130. The disposal technique may be any technique capable of contacting and adhering the preform material 140 about aft cavity assembly 130. Suitable disposal techniques may include, but are not limited to, overwrapping, braiding, combinations thereof, and the like. Next, at an exemplary step 400 of FIG. 1D, at least one aft alignment aperture 150 may be formed through the aft cavity assembly 130 to fabricate an aft core assembly 160. The formation technique may be any machining process suitable for forming the aperture(s) without degrading the carbon-containing foam materials, baffle materials or preform materials of the aft cavity assembly 130. The resultant alignment apertures 150 may exhibit and possess any dimensions necessary to facilitate a flow of fluid, e.g., air, through the aft core assembly 160 during use, as well as permit the polymeric material to flow out when being removed in a future step. Once the alignment apertures 150 are formed, a resultant aft core assembly 160 may be ready for further assembly at the future exemplary step shown in FIG. 3A.

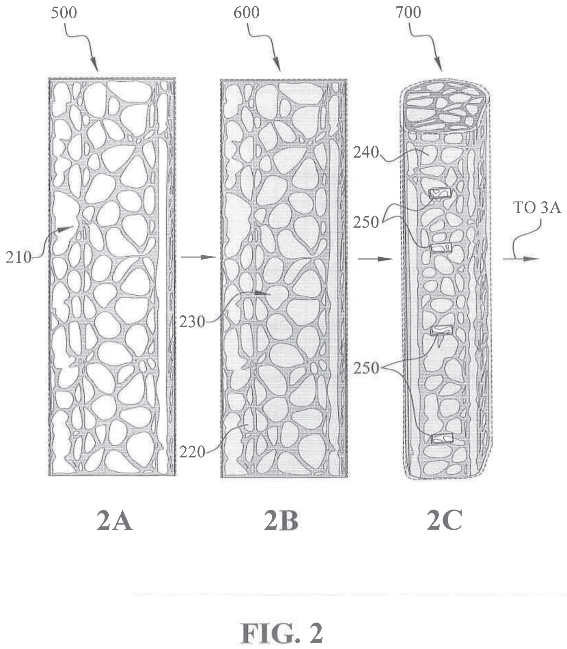

Referring now to FIGS. 2A-2C, at least one forward cavity module 210 comprising a carbon-containing foam material may be provided at exemplary step 500 of FIG. 2A. Like the material for the aft cavity modules 110 discussed above, the carbon-containing foam material may comprise an open pore structure and pore density, that may be machinable, capable of holding a shape under mild pressure(s), and chemically compatible with a future densification process. Suitable carbon-containing foam materials may include, but are not limited to, carbon foam, e.g., reticulated vitreous carbon foam, silicon carbide foam, combinations thereof, and the like. The foam materials may be modified such that a polymeric material (not shown) may be disposed about material. Suitable polymeric material may include, but is not limited to, polyvinyl butyral, polyvinyl alcohol, combinations thereof, and the like.

Next, at an exemplary step 600 of FIG. 2B, at least one preform material 220 may be disposed about at least a portion of an exterior surface of the forward cavity module 210 to form a forward cavity assembly 230. The disposal technique may be any technique capable of contacting and adhering the preform material 220 about the forward cavity module 210 without degrading the carbon-containing foam materials and/or preform materials. Suitable disposal techniques may include, but are not limited to, overwrapping, braiding, combinations thereof, and the like. Next, at an exemplary step 700 of FIG. 2C, at least one forward alignment aperture 250 may be formed through the forward cavity assembly 230 to fabricate a forward core assembly 240. The formation technique may be any machining process suitable for forming the aperture(s) without degrading the carbon-containing foam materials and/or preform materials of the forward cavity assembly 230. The resultant alignment apertures 250 may exhibit and possess any dimensions necessary to facilitate a flow of fluid, e.g., air, through the forward core assembly 240 during use, as well as permit the polymeric material to flow out when being removed in a future step. Once the alignment apertures 250 are formed, the resultant forward core assembly 240 may be ready for further assembly at the future exemplary step shown in FIG. 3A.

Referring now to FIGS. 3A and 3B, the aft core assembly 160 and forward core assembly 240 may be placed adjacent each other and aligned at an exemplary step 800 of FIG. 3A. Any suitable alignment technique may be utilized to join the assemblies 160, 240 together without degrading the carbon-containing foam materials, baffle materials or preform materials of the assemblies 160, 240. In at least one embodiment, an alignment tool, e.g., an alignment pin (not shown), may be inserted within at least one aft alignment aperture 150 and/or at least one forward alignment aperture 250 to form a series of male-to-female fastening interfaces. The alignment tool material may be any material suitable for use in retaining the aft core assembly 160 and forward core assembly 240 together as well as capable of melting at a temperature less than or approximate to a densification temperature that will be discussed later. In at least one embodiment, the polymeric material may be removed through an optional, separate heat treatment technique. Suitable alignment material may include, but is not limited to, a polymeric resin, e.g., polyvinyl butyral (PVB), polyvinyl alcohol (PVA), combinations thereof, and the like. The assemblies 160, 240 may be aligned at the interfaces and joined via the alignment pins.

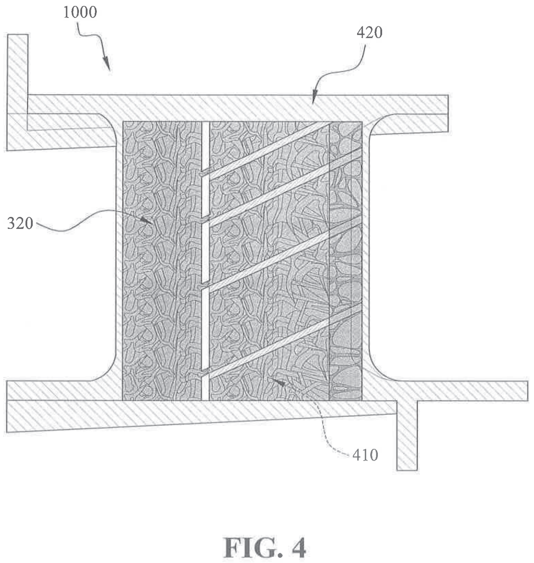

Once aligned and joined together, at least one preform material 310 may be disposed about at least a portion of the combined exterior surfaces of the assemblies 160, 240 at an exemplary step 900 of FIG. 3B. The disposal technique may be any technique capable of contacting and adhering the preform material 310 to the assemblies 160, 240 without degrading the carbon-containing foam materials, baffle materials or preform materials contained therein. Suitable disposal techniques may include, but are not limited to, overwrapping, braiding, combinations thereof, and the like. Once the preform material 310 is disposed, a resultant assembled core 320 may be ready for further assembly at the future exemplary steps shown in FIGS. 4-6. In at least one embodiment, and in an additional optional step, the resultant assembled core may be machined to facilitate further assembly at the future exemplary steps show in FIGS. 4-6.

Referring now to FIGS. 4-6, the assembled core 320 may be disposed within a cavity 410 of a gas turbine engine component 420 at an exemplary step 1000 of FIG. 4. The disposal technique may be any technique capable of inserting the core 320 within the cavity 410 without degrading the carbon-containing foam materials, baffle materials or preform materials contained within the core 320. In the alternative, the gas turbine engine component 420 may comprise one or more pieces that may be disposed and assembled about the assembled core 320. In an at least one embodiment, the gas turbine engine component 420 may be a component possessing an airfoil structural feature, e.g., a stator vane, which the assembled core 320 may exhibit and possess too. However, the assembled core 320 may exhibit and possess an overall structure that may resemble an internal cavity (as illustrated in the cross-section of FIG. 4) of any number of gas turbine engine components.

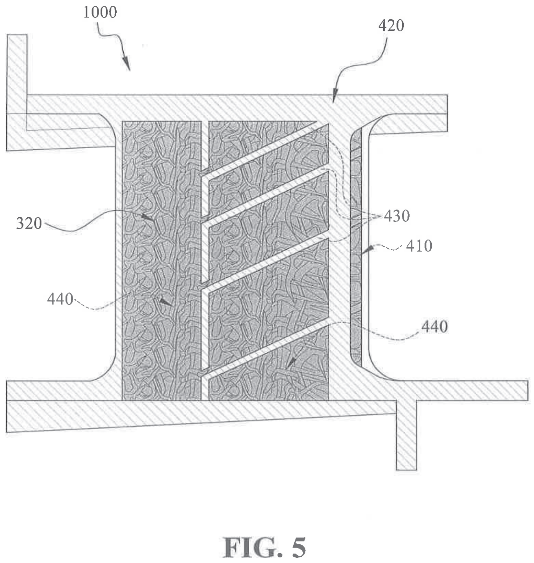

Once disposed within the cavity 410, the gas turbine engine component 420 may be subjected to a densification process at an exemplary step 1100 of FIG. 5. The densification technique may be any capable of being performed at a temperature suitable for melting the alignment pin material and/or polymeric material from the components of the assembled core 320. In at least one embodiment, the polymeric material may be removed through an optional, separate heat treatment technique. Suitable densification technique may include, but are not limited to, chemical vapor infiltration, melt-infiltration, combinations thereof, and the like. Operating parameters for the suitable densification technique may achieve the melt as discussed above and also may form at least one cooling circuit 430 and/or at least one porous network 440 discussed further below.

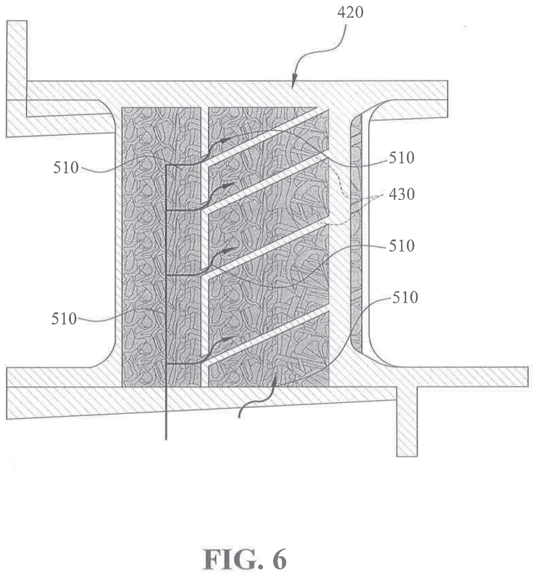

During densification, the carbon-containing foam material maintains the shape of the cavity 410 and adheres to the interior walls of the cavity 410 by the deposition of a reaction product, e.g., a carbon-containing compound, alloy or ceramic, such as, silicon carbide. Once the polymeric material and/or alignment pin material are melted and removed, e.g., drained out, from the gas turbine engine component 420, the cooling circuit(s) 430 and/or porous network 440 may be formed within the assembled core 320. As shown in FIG. 6, during use, an airflow, as indicated by the arrows 510, may enter the assembled core 320 through various points of entry and flow throughout the cooling circuit 430 and/or porous network 440.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A special tool in intermediate form, comprising:
at least one aft core assembly (160) having at least one aft alignment aperture (150) and at least one baffle (120);
a forward core assembly (240) having at least one forward alignment aperture (250), the at least one aft core assembly (160) and the forward core assembly (240) disposed adjacent to and aligned with one another;
at least one alignment tool disposed within each at least one aft alignment aperture (150), and aligned with and also disposed within each at least one forward alignment aperture (250); and
a preform material (140; 220; 310) disposed about the adjacent, aligned aft core assembly (160) and forward core assembly (240).

2. The special tool of claim 1, wherein the at least one aft core assembly (160), the forward core assembly (240) or both the at least one aft core assembly (160) and the forward core assembly (240) comprise one or more of the following foam materials: carbon, silicon carbide, and combinations thereof.

3. The special tool of claim 2, wherein the carbon foam comprises a reticulated vitreous carbon foam.

4. The special tool of claim 2 or 3, wherein the one or more foam materials further comprise a coating of one or more of the following polymers: polyvinyl butyral, and combinations thereof.

5. The special tool of claim 4, wherein the one or more polymer coated foam materials further comprise the preform material (140; 220; 310) disposed about at least a portion of the at least one aft core assembly (160), the at least one forward core assembly (240) or both the at least one aft core assembly (160) and the at least one forward core assembly (240).

6. The special tool of any preceding claim, wherein the at least one alignment tool comprises an alignment pin.

7. The special tool of any preceding claim, wherein the preform material (140; 220; 310) comprises one or more of the following materials: silicon carbide, and combinations thereof.

8. A process for fabricating a special tool, comprising:
fabricating an aft core assembly (160);
fabricating a forward core assembly (240);
assembling together the aft core assembly (160) and the forward core assembly (240) using at least one alignment tool to form an assembled core (320);
disposing at least one preform material (310) about at least a portion of an exterior surface of the assembled core (320);
disposing the assembled core (320) within a cavity (410) of a gas turbine engine component (420) having an airfoil; and
densifying the gas turbine engine component (420) to form at least one cooling circuit (430) and at least one porous network (440) within the assembled core (320).

9. The process of claim 8, wherein fabricating the aft core assembly (160) comprises:
providing at least one aft cavity module (110) comprising a foam;
separating the at least one aft cavity module (110) using at least one baffle (120);
assembling the at least one aft cavity module (110) and the at least one baffle (120) together to form an aft assembly;
disposing at least one preform material (140) about at least a portion of an exterior surface of the aft assembly; and
forming at least one aft alignment aperture (150) through the aft assembly to form the aft core assembly (160).

10. The process of claim 8 or 9, wherein disposing the at least one preform material (140; 310) comprises at least one of the following techniques: overwrapping, braiding, and combinations thereof.

11. The process of any of claims 8 to 10, wherein the foam comprises one or more of the following foam materials: carbon, silicon carbide, and combinations thereof.

12. The process of claim 11, wherein the foam materials further comprise a coating of one or more of the following polymers: polyvinyl butyral, and combinations thereof.

13. The process of any of claims 8 to 12, wherein fabricating the forward core assembly (240) comprises:
fabricating a forward cavity module (210) comprising a foam;
disposing at least one preform material (220) about at least a portion of an exterior surface of the forward cavity module (210) to form a forward assembly; and
forming at least one forward alignment aperture (250) through the forward assembly to form a forward core assembly (240).

14. The process of any of claims 8 to 14, wherein the at least one preform material (140; 220; 310) comprises one or more of the following materials: silicon carbide, and combinations thereof.

15. The process of any of claims 8 to 14, wherein the at least one alignment tool comprises an alignment pin.
